# EUROPEAN PATENT SPECIFICATION

(11) **EP 1 384 929 B1**
(45) Date of publication and mention of the grant of the patent: **11.01.2006**
(21) Application number: 03254480.1
(22) Date of filing: 17.07.2003
(51) Int. Cl.: F16L 3/233, B65D 63/08

(54) **Ball lock cable tie having stiffening ribs**
Kugelschlosskabelbinder mit Versteifungsrippen
Serre-câble avec un verrouillage à bille et nervures de renforcement

(30) Priority: 23.07.2002 US 397838 P; 03.07.2003 US 613062
(43) Date of publication of application: 28.01.2004
(73) Proprietor: PANDUIT CORPORATION, Tinley Park, Illinois 60477-3091 (US)
(72) Inventor: Caveney, Jack E., Hinsdale Illinois 60521 (US)
(74) Representative: Neobard, William John

(56) References cited:
- WO-A-86/07333
- CH-A- 500 420
- NL-C- 1 003 889
- US-A- 205 720
- US-A- 6 076 235
- US-B1- 6 386 489
- PATENT ABSTRACTS OF JAPAN vol. 1999, no. 13, 30 November 1999 (1999-11-30) -& JP 11 227823 A (HIZUME HIROMI), 24 August 1999 (1999-08-24)

## Description

### Cross-Reference to Related Applications

This Application claims priority to U.S. Provisional Application Serial No. 60/397,838, filed on July 23, 2002.

### Background of the Invention

The present invention is directed to a cable tie, and more particularly, to a three-piece metal cable tie that utilizes a roller means as the locking mechanism.

Metallic bundling devices incorporating locking balls and roller pins have been used for bundling bales of cotton or the like since the Nineteenth Century. None of the prior devices were positive locking, *i*.*e*. depending on the orientation of the locking head, gravity could hold the ball out of locking engagement with the strap resulting in release. U.S. Pat. No. 4,399,592 addressed this problem by teaching the addition of a raised portion or protuberance for deflecting the threaded strap away from the floor as the threaded strap exits the locking head. This deflection ensures that the locking ball is in continuous engagement with the threaded strap regardless of the position of the ball or the orientation of the locking head.
US-A-4,399,592 discloses
A cable tie, comprising:
an elongate metallic strap having a first end and a second end opposite the first end;
a metallic locking head secured to the first end of the strap for receiving the second end of the strap, the head comprising a strap entry face, a strap exit face, and a strap-receiving aperture extending therebetween, the head further comprising a floor and a roof which diverge in the direction of the exit face,
metallic roller means for lockingly engaging the strap, the head comprising retention means disposed adjacent the exit face for captively holding the roller means within the head,
the roller means being movable between a threading position wherein the roller means is disposed adjacent the exit face and the retention means, and a locking position wherein the roller means is closer to the entry face.

### Summary of the Invention

It would be desirable to provide a cable tie having improved tensile strength.

It would also be desirable to provide a cable tie locking head having stiffening deformations in the side to increase locking head strength.

It would further be desirable to provide a cable tie strap having stiffening ribs along the return loop to increase return loop strength.

A first prior art document, CH-A-500420 discloses a cable tie of the type having a metallic locking head and a roller. It does not include features aimed at improved strength. A second prior art document is US-A-6,076,235 which again relates to a cable tie having a locking head including a locking ball. It does not include measures designed to improve strength.
The invention is defined in the appended claims.

### Brief Description of Figures

FIG. 1 is a perspective view of the metal tie of the present invention shown secured around a bundle of wires;

FIG. 2 is a top perspective view of the cable tie of FIG. 1;

FIG. 3 is a top view of the cable tie of FIG. 1;

FIG. 4 is a side view of the cable tie of FIG. 1;

FIG. 5 is an end view of the cable tie of FIG. 1;

FIG. 6 is a partial exploded view of FIG. 2, with the strap portion separate from the locking head;

FIG. 7 is a bottom perspective view of a portion of the strap that engages the head;

FIG. 8 is a sectional view taken along lines 8-8 of FIG. 4;

FIG. 9 is a sectional view taken along lines 9-9 of FIG. 4;

FIG. 10 is a sectional view taken along lines 10-10 of FIG. 3;

FIG. 11 is a sectional view taken along lines 11-11 of FIG. 5;

FIG. 12 is a sectional view of the strap and locking head, which depicts the locking ball in its threading position;

FIG. 13 is a sectional view of the strap and locking head, which depicts the locking ball in its locking position; and

FIG. 14 is a sectional view taken along lines 14-14 of FIG. 13.

### Detailed Description of Preferred Embodiments

The illustrated embodiments of the invention are directed to a three-piece cable tie that utilizes a roller means as the locking mechanism.

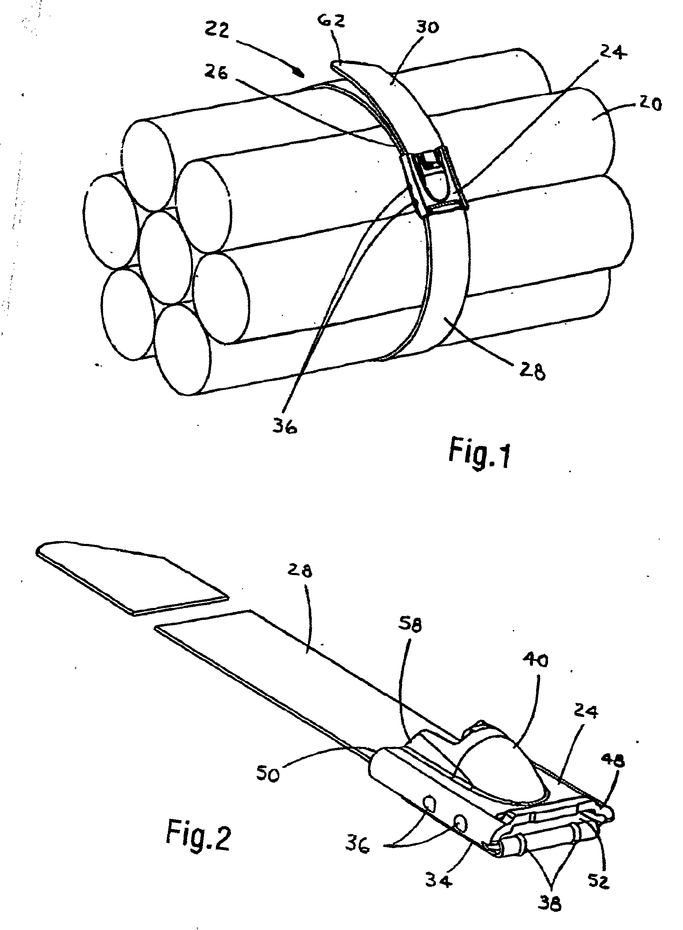

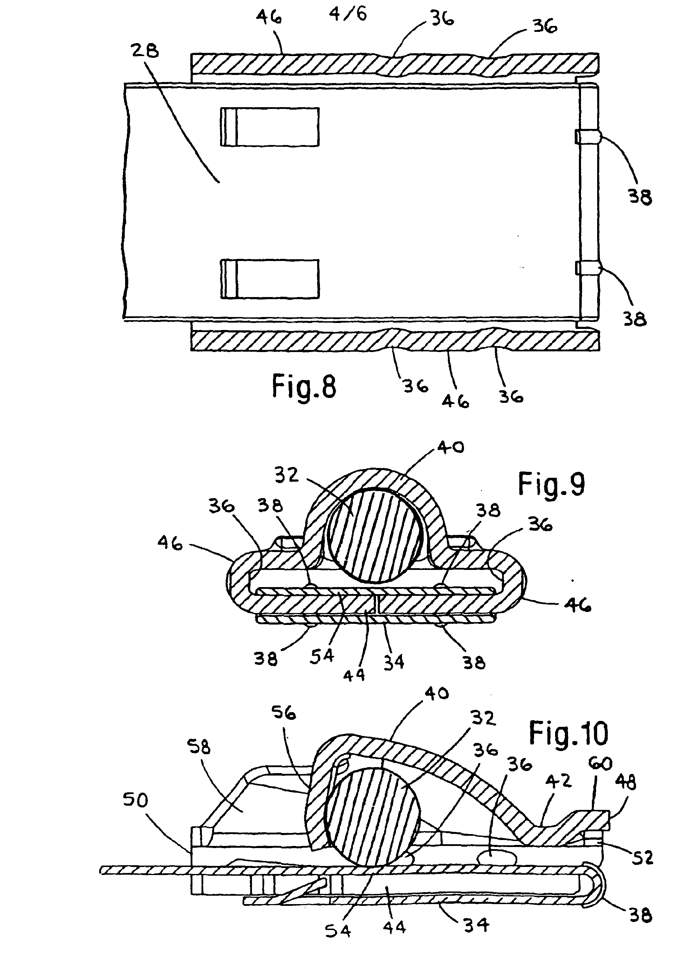

Referring now to the drawings, a cable tie for bundling a plurality of elongate objects, such as wires 20, and for holding objects together is generally indicated in FIG. 1 by reference numeral 22. Cable tie 22 includes a locking head 24 secured to a first end 26 of an elongate strap 28 for receiving a second end 30 of the strap 28, and roller means in the form of a ball or sphere 32, best shown in FIGS. 9-14, for retaining the strap 28 within the locking head 24. Preferably, the ball, head and strap are formed of stainless steel to allow the strap to be used over a wide temperature range and to give the cable tie high strength and excellent corrosion resistance. Additionally, as known in the art, the strap 28 may be coated.

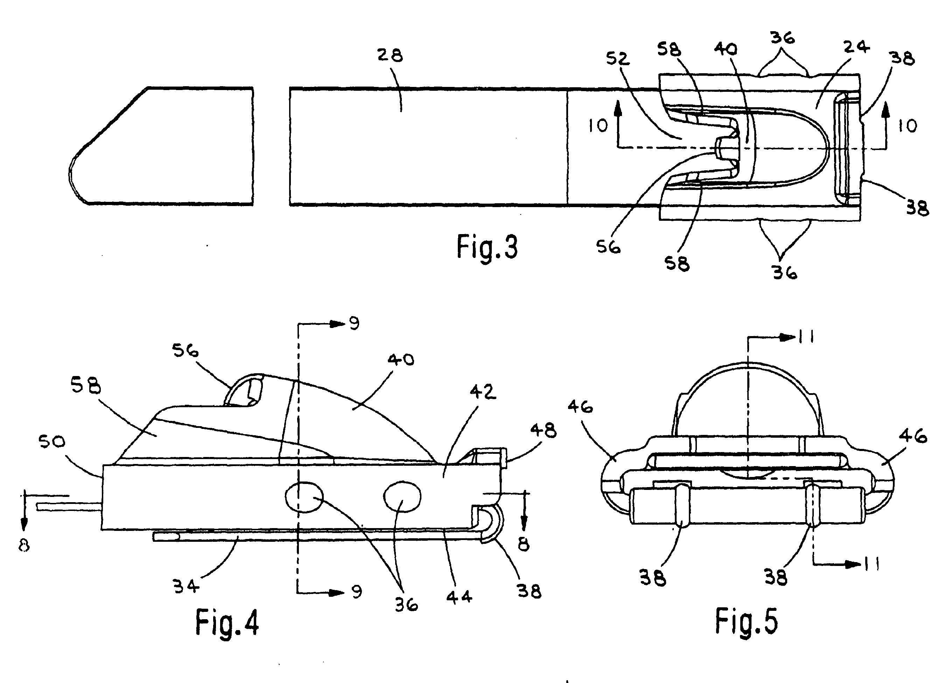

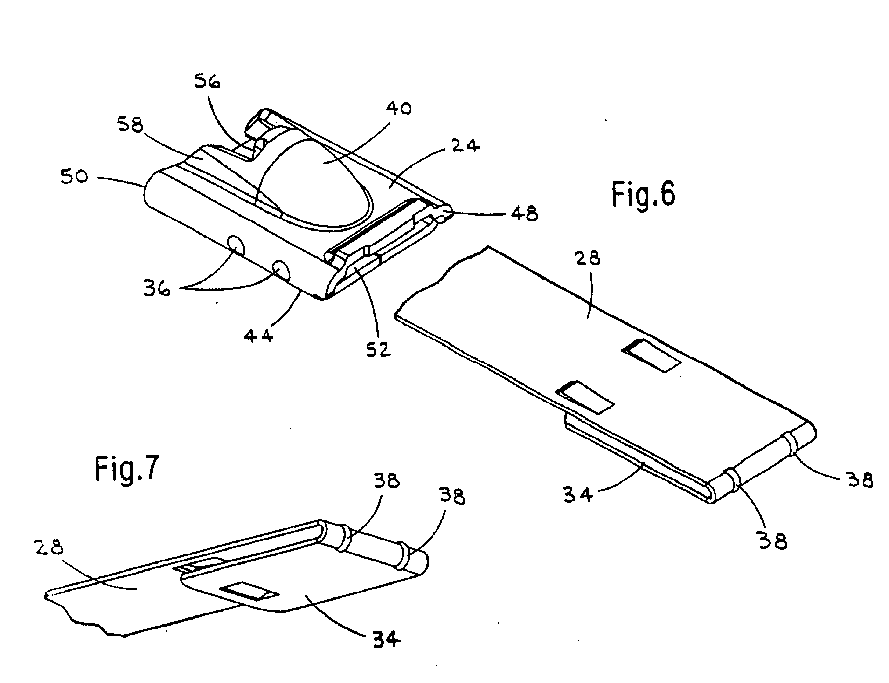

The cable tie of the present invention is formed by assembling a locking head 24, shown in FIGS. 2-5, a strap 28 and a hooked portion 34 formed integral with the strap 28 as shown in FIGS. 6 and 7. As best seen in FIG. 8, the locking head 24 has a plurality of stiffening deformations, such as deformation 36, in the sides of the locking head 24. Moreover, the strap 28 has a plurality of stiffening ribs, such as rib 38, near the first end 26 in the rear of the strap 28 at the return loop. The stiffening deformations and ribs provide additional strength to the locking head 24 and return loop, respectively, thus increasing the load at which the locking head 24 and return loop will unfold, especially when the locking head 24 is unsupported. As a result, the cable tie 22 has increased tensile strength.

Referring to FIGS. 9-14, locking head 24 comprises a roof 40, a ceiling 42, and a bottom wall 44 with the ceiling 42 and bottom wall 44 joined by a pair of sidewalls 46. As shown in FIGS. 10-13, the locking head 24 includes a strap entry face 48, a strap exit face 50, and a strap-receiving aperture 52 extending therebetween. The roof 40 and floor 54 diverge in the direction of the exit face 50.

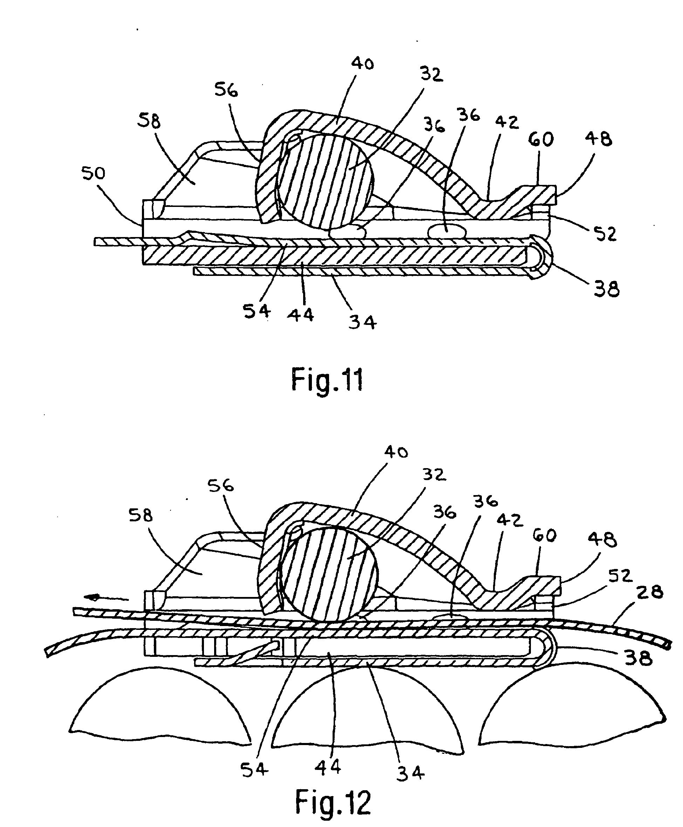

The ball 32 has a textured or roughened surface to increase its coefficient of friction with the strap 28. As best seen in FIGS. 11-12, the ball 32 is captively held between the roof 40 and floor 54 by retention means comprising a finger 56 extending from the roof 40 towards the floor 54 adjacent the exit face 50. One end of the roof 40 joins the ceiling 42 adjacent the entry face 48 with spaced wings 58 joining other parts of the roof 40 and ceiling 42.

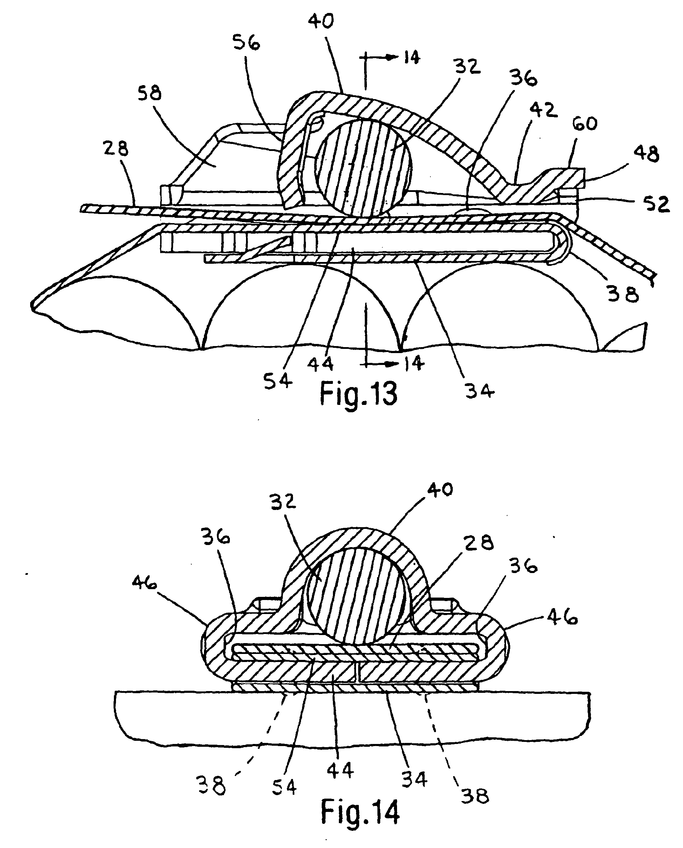

The locking ball 32 is movable between a threading position, shown in FIG. 12, wherein the ball 32 is disposed engaging finger 56 adjacent exit face 50 and a locking position, shown in FIG. 13, wherein the ball 32 is closer to entry face 48 and securely engages the threaded strap 28. In the threading position, the ball 32 concurrently engages the finger 56 and roof 40. In the locking position, the strap 28 is compressively held between the ball 32 and the floor 54.

As shown in FIGS. 10-13, locking head 24 includes a lead-in portion 60 at the strap entry face 48. The lead-in portion 60 facilitates the initial insertion of tip 62 into the locking head 24 and reduces installation time for threading the cable tie 22. Moreover, the lead-in portion 60 strengthens the top of the locking head 24. As the strap 28 enters the strap entry face 48, the strap 28 engages the lead-in portion 60 and the strap 28 is biased toward floor 54.

In operation, after the strap 28 is wrapped around the objects to be held, tip 62 is inserted into the locking head 24. Continued threading of the strap 28 results in positive engagement of the strap 28 and ball 32 at any angle the head 24 is held. After the strap 28 has been tightened and released, locking ball 32 moves to its locking position, shown in FIG. 13, where the strap 28 is compressively held between the ball 32 and the floor 54.

The disclosed invention provides a cable tie that utilizes a roller means as the locking mechanism. It should be noted that the above-described and illustrated embodiments and preferred embodiments of the invention are not an exhaustive listing of the forms such a cable tie in accordance with the invention might take; rather, they serve as exemplary and illustrative of embodiments of the invention as presently understood. By way of example, and without limitation, a cable tie locking head having more than two stiffening deformations on each side thereof is contemplated to be within the scope of the invention. Many other forms of the invention are believed to exist.

## Claims

1. A cable tie 22, comprising:
an elongate metallic strap 28 having a first end 26 and a second end 30 opposite the first end;
a metallic locking head 24 secured to the first end 26 of the strap for receiving the second end 30 of the strap, the head comprising a strap entry face 48, a strap exit face 50, and a strap-receiving aperture extending therebetween, the head further comprising a floor 54 and a roof 40 which diverge in the direction of the exit face 50,
wherein the head 24 comprises at least one stiffening deformation 36 on a first side thereof and at least one stiffening deformation 36 on a second side thereof, said deformations being indentations for improving locking head strength; and
metallic roller means 32 for lockingly engaging the strap, the head 24 comprising retention means 56 disposed adjacent the exit face for captively holding the roller means 32 within the head 24,
the roller means 32 being movable between a threading position wherein the roller means is disposed adjacent the exit face 50 and the retention means 56, and a locking position wherein the roller means is closer to the entry face.

2. A cable tie 22, comprising:
an elongate metallic strap 28 having a first end 26 and a second end 30 opposite the first end;
a metallic locking head 24 secured to the first end 26 of the strap for receiving the second end 30 of the strap, the head comprising a strap entry face 48, a strap exit face 50, and a strap-receiving aperture extending therebetween, the head further comprising a floor 54 and a roof 40 which diverge in the direction of the exit face; and
metallic roller means 32 for lockingly engaging the strap 28, the head 24 comprising retention means disposed adjacent the exit face for captively holding the roller means within the head 24,
the roller means 32 being movable between a threading position wherein the roller means is disposed adjacent the exit face and the retention means, and a locking position wherein the roller means is closer to the entry face,
wherein the first end of the strap comprises at least one stiffening rib 38 along the return loop and disposed adjacent the head to increase return loop strength.

3. A cable tie 22, comprising:
an elongate metallic strap 28 having a first end 26 and a second end 30 opposite the first end;
a metallic locking head 24 secured to the first end 26 of the strap for receiving the second end of the strap, the head comprising a strap entry face 48, a strap exit face 50, and a strap-receiving aperture extending therebetween, the head further comprising a floor 54 and a roof 40 which diverge in the direction of the exit face,
wherein the head 24 comprises at least one stiffening deformation 36 on a first side thereof and at least one stiffening deformation 34 on a second side thereof, said deformations being indentations for improving locking head strength; and
metallic roller means 32 for lockingly engaging the strap, the head 24 comprising retention means 56 disposed adjacent the exit face for captively holding the roller means 32 within the head,
the roller means 32 being movable between a threading position wherein the roller means is disposed adjacent the exit face and the retention means, and a locking position wherein the roller means is closer to the entry face,
wherein the first end of the strap comprises at least one stiffening rib 30 along the return loop and disposed adjacent the head to increase return loop strength.

4. The cable tie of claim 1 or 3, wherein the head comprises two indentations 36 on the first side thereof and two indentations of the second side thereof.

5. The cable tie of claim 2 or 3, wherein the first end of the strap comprises two ribs 28 adjacent the head.

6. The cable tie of claim 1, 2 or 3, wherein the head further comprises a lead-in portion at the entry face 48.

7. The cable tie of any preceding claim wherein the strap is coated.

8. The cable tie of any preceding claim wherein the roller means 36 comprises a ball.

9. The cable tie of any preceding claim wherein the retention means 56 comprises a finger extending from the roof 40 adjacent the exit face.

## Patentansprüche

1. Kabelbinder 22, der folgendes aufweist:
einen länglichen Metallstreifen 28, der ein erstes Ende 26 und ein zweites Ende 30 gegenüber dem ersten Ende besitzt,
einen metallischen Schlossteil 24, der am ersten Ende 26 des Streifens zur Aufnahme des zweiten Endes 30 des Streifens befestigt ist, wobei der Schlossteil eine Streifeneintrittsfläche 48, eine Streifenaustrittsfläche 50 und eine Streifenaufnahmeöffnung aufweist, die sich dazwischen erstreckt, wobei der Schlossteil weiters einen Boden 54 und eine Abdeckung 40 aufweist, welche Teile in Richtung zur Austrittsfläche 50 divergieren,
wobei der Schlossteil 24 mindestens eine versteifende Verformung 36 an einer ersten Seite desselben und mindestens eine versteifende Verformung 36 an einer zweiten Seite desselben besitzt, wobei die vorerwähnten Verformungen Vertiefungen zur Erhöhung der Schlossteilfestigkeit sind, und
ein metallisches Rollorgan 32 zum verriegelnden Eingriff in den Streifen, wobei der Schlossteil 24 ein Sicherungsmittel 56 aufweist, das neben der Austrittsfläche angeordnet ist, damit es das Rollorgan 32 innerhalb des Schlossteils 24 festhält,
wobei das Rollorgan 32 zwischen einer Einschiebeposition, bei der die Rolle neben der Austrittsfläche 50 und dem Sicherungsmittel 56 angeordnet ist, und einer Verriegelungsposition, bei der die Rolle der Eintrittsfläche näher ist, beweglich ist.

2. Kabelbinder 22, der folgendes aufweist:
einen länglichen Metallstreifen 28, der ein erstes Ende 26 und ein zweites Ende 30 gegenüber dem ersten Ende besitzt,
einen metallischen Schlossteil 24, der am ersten Ende 26 des Streifens zur Aufnahme des zweiten Endes des Streifens befestigt ist, wobei der Schlossteil eine Streifeneintrittsfläche 48, eine Streifenaustrittsfläche 50 und eine Streifenaufnahmeöffnung aufweist, die sich dazwischen erstreckt, wobei der Schlossteil weiters einen Boden 54 und eine Abdeckung 40 aufweist, die in Richtung zur Austrittsfläche divergieren,
und
ein metallisches Rollorgan 32 zum verriegelnden Eingriff in den Streifen, wobei der Schlossteil 24 ein Sicherungsmittel aufweist, das neben der Austrittsfläche angeordnet ist, damit es das Rollorgan 32 innerhalb des Schlossteils 24 festhält,
wobei das Rollorgan 32 zwischen einer Einschiebeposition, bei der die Rolle neben der Austrittsfläche und dem Sicherungsmittel angeordnet ist, und einer Verriegelungsposition, bei der die Rolle der Eintrittsfläche näher ist, beweglich ist,
wobei das erste Ende des Streifens mindestens eine Versteifungsrippe 38 entlang der Umkehrschleife aufweist und neben dem Schlossteil angeordnet ist, um die Festigkeit der Umkehrschleife zu erhöhen.

3. Kabelverbinder 22, der folgendes aufweist:
einen länglichen Metallstreifen 28, der ein erstes Ende 26 und ein zweites Ende 30 gegenüber dem ersten Ende besitzt,
einen metallischen Schlossteil 24, der am ersten Ende 26 des Streifens zur Aufnahme des zweiten Endes des Streifens befestigt ist, wobei der Schlossteil eine Streifeneintrittsfläche 48, eine Streifenaustrittsfläche 50 und eine Streifenaufnahmeöffnung aufweist, die sich dazwischen erstreckt, wobei der Schlossteil weiters einen Boden 54 und eine Abdeckung 40 aufweist, die in Richtung zur Austrittsfläche 50 divergieren,
wobei der Schlossteil 24 mindestens eine versteifende Verformung 36 an einer ersten Seite desselben und mindestens eine versteifende Verformung 34 an einer zweiten Seite desselben besitzt, wobei die vorerwähnten Verformungen Vertiefungen zur Erhöhung der Festigkeit des Schlossteils sind, und
ein metallisches Rollorgan 32 zum verriegelnden Eingriff in den Streifen aufweist, wobei der Schlossteil 24 ein Sicherungsmittel 56 aufweist, das neben der Austrittsfläche angeordnet ist, damit es das Rollorgan 32 innerhalb des Schlossteils 24 festhält,
wobei das Rollorgan 32 zwischen einer Einschiebeposition, bei der das Rollorgan neben der Austrittsfläche und dem Sicherungsmittel angeordnet ist, und einer Verriegelungsposition, bei der die Rolle der Eintrittsfläche näher ist, beweglich ist,
wobei das erste Ende des Streifens mindestens eine Versteifungsrippe 30 entlang der Umkehrschleife aufweist und neben dem Schlossteil angeordnet ist, damit sie die Festigkeit der Umkehrschleife erhöht.

4. Kabelbinder nach Anspruch 1 oder 3, wobei der Schlossteil zwei Vertiefungen 36 auf der ersten Seiten desselben und zwei Vertiefungen auf der zweiten Seite desselben besitzt.

5. Kabelbinder nach Anspruch 2 oder 3, wobei das erste Ende des Streifens zwei Rippen 28 neben dem Schlossteil besitzt.

6. Kabelbinder nach Anspruch 1, 2 oder 3, wobei der Schlossteil weiters einen Einführungsteil an der Eintrittsfläche 48 besitzt.

7. Kabelbinder nach einem der vorhergehenden Ansprüche, wobei der Streifen beschichtet ist.

8. Kabelbinder nach einem der vorhergehenden Ansprüche, wobei das Rollorgan 36 eine Kugel mitumfaßt.

9. Kabelbinder nach einem der vorhergehenden Ansprüche, wobei das Sicherungsmittel 56 einen Finger mitumfaßt, der sich von der Abdeckung 40 neben der Austrittsfläche weg erstreckt.

## Revendications

1. Attache pour câbles (22) comprenant :
une sangle métallique allongée (28) ayant une première extrémité (26) et une seconde extrémité (30) opposée à la première extrémité;
une tête de blocage métallique (24) fixée à la première extrémité (26) de la sangle pour recevoir la seconde extrémité (30) de la sangle, la tête comprenant une face d'entrée de la sangle (48), une face de sortie de la sangle (50) et une ouverture de réception de la sangle s'étendant entre celles-ci, la tête comprenant en outre un plancher (54) et un plafond (40) qui divergent dans la direction de la face de sortie (50);
la tête (24) comprenant au moins une déformation de raidissement 36 sur un premier côté de celle-ci et au moins une déformation de raidissement 36 sur un deuxième côté de celle-ci, lesdites déformations étant des indentations destinées à améliorer la solidité de la tête de blocage; et
un moyen à galet métallique (32) pour engager la bande en la bloquant, la tête (24) comprenant un moyen de maintien (56) disposé à proximité de la face de sortie pour retenir le moyen à galet (32) captif à l'intérieur de la tête (24);
le moyen à galet (32) étant mobile entre une position d'enfilage, dans laquelle le moyen à galet est disposé à proximité de la face de sortie (50) et du moyen de maintien (56), et une position de blocage, dans laquelle le moyen à galet est plus proche de la face d'entrée.

2. Attache pour câbles (22) comprenant :
une sangle métallique allongée (28) ayant une première extrémité (26) et une seconde extrémité (30) opposée à la première extrémité;
une tête de blocage métallique (24) fixée à la première extrémité (26) de la sangle pour recevoir la seconde extrémité (30) de la sangle, la tête comprenant une face d'entrée de la sangle (48), une face de sortie de la sangle (50) et une ouverture de réception de la sangle s'étendant entre celles-ci, la tête comprenant en outre un plancher (54) et un plafond (40) qui divergent dans la direction de la face de sortie; et
un moyen à galet métallique (32) pour engager la bande (28) en la bloquant, la tête (24) comprenant un moyen de maintien disposé à proximité de la face de sortie pour retenir le moyen à galet captif à l'intérieur de la tête (24);
le moyen à galet (32) étant mobile entre une position d'enfilage, dans laquelle le moyen à galet est disposé à proximité de la face de sortie et du moyen de maintien, et une position de blocage, dans laquelle le moyen à galet est plus proche de la face d'entrée,
la première extrémité de la sangle comprenant au moins une nervure de raidissement (38) le long de la boucle de retour et disposée à proximité de la tête pour augmenter la solidité de la boucle de retour.

3. Attache pour câbles (22) comprenant :
une sangle métallique allongée (28) ayant une première extrémité (26) et une seconde extrémité (30) opposée à la première extrémité;
une tête de blocage métallique (24) fixée à la première extrémité (26) de la sangle pour recevoir la seconde extrémité de la sangle, la tête comprenant une face d'entrée de la sangle (48), une face de sortie de la sangle (50) et une ouverture de réception de la sangle s'étendant entre celles-ci, la tête comprenant en outre un plancher (54) et un plafond (40) qui divergent dans la direction de la face de sortie;
la tête (24) comprenant au moins une déformation de raidissement 36 sur un premier côté de celle-ci et au moins une déformation de raidissement 34 sur un deuxième côté de celle-ci, lesdites déformations étant des indentations destinées à améliorer la solidité de la tête de blocage; et
un moyen à galet métallique (32) pour engager la bande en la bloquant, la tête (24) comprenant un moyen de maintien (56) disposé à proximité de la face de sortie pour retenir le moyen à galet (32) captif à l'intérieur de la tête;
le moyen à galet (32) étant mobile entre une position d'enfilage, dans laquelle le moyen à galet est disposé à proximité de la face de sortie et du moyen de maintien, et une position de blocage, dans laquelle le moyen à galet est plus proche de la face d'entrée,
la première extrémité de la sangle comprenant au moins une nervure de raidissement (30) le long de la boucle de retour et disposée à proximité de la tête pour augmenter la solidité de la boucle de retour.

4. Attache pour câbles selon la revendication 1 ou 3, la tête comprenant deux indentations 36 sur un premier côté de celle-ci et deux indentations sur le second côté de celle-ci.

5. Attache pour câbles selon la revendication 2 ou 3, la première extrémité de la sangle comprenant deux nervures (28) à proximité de la tête.

6. Attache pour câbles selon la revendication 1, 2 ou 3, la tête comprenant en outre une partie d'introduction à la face d'entrée (48).

7. Attache pour câbles selon l'une quelconque des revendications précédentes, la sangle étant revêtue.

8. Attache pour câbles selon l'une quelconque des revendications précédentes, le moyen à galet (36) comprenant une bille.

9. Attache pour câbles selon l'une quelconque des revendications précédentes, le moyen de maintien (56) comprenant un doigt s'étendant à partir du plafond (40) à proximité de la face de sortie.
